(19) Europäisches Patentamt
European Patent Office
Office européen des brevets

(11) Veröffentlichungsnummer : **0 090 770**
**B1**

(12) # EUROPÄISCHE PATENTSCHRIFT

(45) Veröffentlichungstag der Patentschrift : **28.08.85**

(51) Int. Cl.⁴ : **C 08 K 5/49**, C 08 K 5/51, C 08 L 27/06

(21) Anmeldenummer : **83810115.2**

(22) Anmeldetag : **21.03.83**

(54) **Phosphorsäureverbindungen als Kostabilisatoren für Me(II)-Carboxylate und/oder ME(II)-Phenolate in PVC.**

(30) Priorität : **25.03.82 CH 1842/82**
**30.11.82 CH 6949/82**

(43) Veröffentlichungstag der Anmeldung : **05.10.83 Patentblatt 83/40**

(45) Bekanntmachung des Hinweises auf die Patenterteilung : **28.08.85 Patentblatt 85/35**

(84) Benannte Vertragsstaaten : **BE DE FR GB IT NL SE**

(56) Entgegenhaltungen : **US-A- 2 824 847**

(73) Patentinhaber : **CIBA-GEIGY AG**
**Postfach**
**CH-4002 Basel (CH)**

(72) Erfinder : **Müller, Horst, Dr.**
**Reichenberger Strasse 12**
**D-6149 Fürth/Odenwald (DE)**
Erfinder : **Zinke, Horst, Dr.**
**Berlinerweg 12**
**D-6101 Ernsthofen (DE)**
Erfinder : **Wehner, Wolfgang, Dr.**
**Wetzbach 34**
**D-6144 Zwingenberg (DE)**

**EP 0 090 770 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Stabilisatorengemisch aus Tri- und Tetrathiophosphorsäureestern und PVC-Stabilisatoren vom Typ Me(II)-Carboxylat und/oder Me(II)-Phenolat, das damit stabilisierte PVC sowie dessen Verwendung zur Stabilisierung von PVC.

Bekannte Kostabilisatoren für Metall(II)-carboxylate und Me(II)-Phenolate sind beispielsweise Triorganophosphite, Polyole und Antioxidantien, über die Kurt Thinius in seinem Buch «Stabilisierung und Alterung von Plastwerkstoffen» auf Seiten 172, 281 und 517-530, [Verlag Chem. 1962, Bd. 1] berichtet hat. Weitere diesbezügliche bekannte Kostabilisatoren sind Triorganothiophosphite, wie beispielsweise in dem US-Patent 2,824,847 beschrieben wird. Alle bekannten Kostabilisatoren führen noch nicht zu dem erwünschten Stabilisierungseffekt. Es treten noch beachtliche Schädigungen des PVC infolge der thermischen Belastung auf. Die physikalischen Eigenschaften ändern sich während der Verarbeitung ungünstig und im Falle der Verwendung von Triorganothiophosphiten als Kostabilisatoren treten auch Geruchsbelästigungen auf.

Es wurde nun gefunden, dass bestimmte Tri- und Tetrathiophosphorsäureester als Kostabilisatoren für die bekannten PVC-Stabilisatoren vom Typ Me(II)-Carboxylat und Me(II)-Phenolat die Stabilisierung von PVC bei der Verarbeitung, insbesondere gegen Schädigung durch die thermische Belastung (Chlorwasserstoffabspaltung und Autooxidation) beträchtlich verbessern.

Gegenüber den bekannten Gemischen werden die physikalischen Eigenschaften des PVC noch weniger verändert und auch Geruchsbelästigung weitgehend ausgeschlossen.

Gegenstand der Erfindung ist somit ein Stabilisatorengemisch erhältlich durch Mischen mindestens einer Verbindung der Formel I

$$(ROOC{-}C_nH_{2n}S{-})_3\ PX \qquad (I)$$

in der X O oder S, n eine ganze Zahl von 1 bis 5 und R geradkettiges oder verzweigtes $C_1$-$C_{18}$-Alkyl oder substituiertes oder unsubstituiertes Cyclohexyl bedeuten, und mindestens eines PVC-Stabilisators vom Typ Me(II)-Carboxylat und/oder Me(II)-Phenolat, wobei Me(II) ein oder mehrere Metalle aus der Reihe Ba, Sr, Ca, Mg, Zn und Cd bedeutet, und wobei, bezogen auf das PVC, 0,01-2 Gew.-% der Verbindung der Formel I und 0,1-4 Gew.-% des Me(II)-Carboxylates und/oder Me(II)-Phenolates eingesetzt werden.

Nach einer Vorzugsform der Erfindung werden zusätzlich mindestens ein Triorganophosphit der Formel II

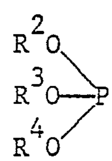

(II)

in der $R^2$, $R^3$ und $R^4$ gleich oder (bevorzugt) verschieden sind und geradkettiges oder verzweigtes $C_4$-$C_{18}$-Alkyl oder einen substituierten oder unsubstituierten Phenylrest darstellen, und/oder mindestens ein Antioxidans mitverwendet, wobei, bezogen auf das PVC, 0,01-2 Gew.-% der Verbindung der Formel I, 0,1-4 Gew.-% des Me(II)-Carboxylates und/oder Me(II)-Phenolates 0,05-4 Gew.-% des Phosphites der Formel II und/oder 0,01-1 Gew.-% des Antioxidans eingesetzt werden.

R in Formel I kann folgende Alkylreste bedeuten : z. B. Methyl, isopropyl, n-Butyl, sec.-Butyl, Tert.-Butyl, tert.-Pentyl, 2-Aetylhexyl, n-Octyl, 1,1,3,3-Tetramethylbutyl, n-Dodecyl, 1,1,7,7-Tetramethyloctyl, n-Octadecyl. Stellt es einen substituierten Cycloalkylrest dar, so kommen als Substituenten Methyl bzw. Aetyl in Frage.

Die $C_nH_{2n}$-Gruppe der Formel I, in der n bevorzugt 2 und insbesondere 1 ist, kann lineares oder verzweigtes Alkylen oder Alkyliden sein. Beispiele sind besonders Methylen, Aethylen und Aethyliden, sowie 1,2- oder 1,3-Propylen, 1,1- oder 2,2-Propyliden, Butylen, Butyliden, Pentylen und Pentyliden.

$R^2$, $R^3$ und $R^4$ in Formel II können dieselben Alkylreste wie die unter R aufgeführten Reste darstellen mit Ausnahme derjenigen mit 1 bis 3 C-Atomen. Als substituierte Phenylgruppe für $R^2$, $R^3$ und $R^4$ erhalten dieselbe geradkettige oder verzweigte Alkylgruppen die gleiche, unter R aufgeführte Definition, insbesondere aber n-Octyl, N-Nonyl- und n-Dodecylgruppen. Bevorzugt bedeuten $R^2$, $R^3$ und $R^4$ einen Phenylrest oder einen $C_8$-$C_{14}$-Alkylrest.

Beispiele von Metallcarboxylaten sind die Metallsalze von gesättigten, ungesättigten oder mit Hydroxylgruppen substituierten aliphatischen Carbonsäuren mit 6 bis 20 C-Atomen, wie Hexansäure, Heptansäure, Octansäure, 2-Aethylhexansäure, Undecylsäure, Laurinsäure, Myristinsäure, Palmitinsäure, Stearinsäure, 12-Oxystearinsäure, Oelsäure, Linosäure oder Ricinolsäure. Ebenfalls von Interesse sind die Metallsalze von aromatischen Carbonsäuren wie beispielsweise substituierte Phenylbenzoate.

Als Metallphenolate kommen insbesondere die Metallsalze von Phenolen mit 6-20 C-Atomen in Frage, beispielsweise Alkylphenolen wie p-tert. Butyl-, p-Octyl-, p-Nonyl- oder p-Dodecylphenol.

Beispiele für Antioxidantien sind :

1.1. Alkylierte Monophenole, wie 2,6-Di-tert.-butyl-4-methylphenol, 2-tert.-butyl-4,6-dimethylphenol, 2,6-Di-tert.-butyl-4-äthylphenol, 2,6-Di-tert.-butyl-4-n-butylphenol, 2,6-Di-tert.-butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-Tert.-butyl-4-methoxymethylphenol.

1.2. Alkylierte Hydrochinone, wie 2,6-Di-tert.-butyl-4-methoxyphenol, 2,5-Di-tert.-butyl-hydrochinon, 2,5-Di-tert.-pentyl-hydrochinon, 2,6-Di-phenyl-4-octadecycloxyphenol.

1.3. Hydroxylierte Thiodiphenyläther, wie 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol).

1.4. Alkyliden-Bisphenole, wie 2,2'-Methylen-bis-(6-tert.-butyl-4-methylphenol), 2,2'-Methylen-bis-(6-tert.-butyl-4-äthylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.-butylphenol), 2,2'-Aetyliden-bis-(4,6-di-tert.-butylphenol), 2,2'-Aethyliden-bis-(6-tert.-butyl-4-isobutylphenol), 4,4'-Methylen-bis-(2,6-di-tert.-butylphenol), 4,4'-Methylen-bis-(6-tert.-butyl-2-methylphenol), 1,1-Bis-(5'-tert.-butyl-4'-hydroxy-2'-methylphenyl)-butan, 2,6-Di-(3'-tert.-butyl-5'-methyl-2'-hydroxybenzyl)-4-methylphenol, 1,1,3-Tris-(5'-tert.-butyl-4'-hydroxy-2'-methylphenyl)-butan, 1,1,-Bis-(5'-tert.-butyl-4'-hydroxy-2'-methylphenyl)-3-n-dodecylmercaptobutan, 2,2-Bis-(4'-Hydroxyphenyl)-propan.
Aethylenglycol-bis-[3,3-bis-(3'-tert.-butyl-4'-hydroxyphenyl)-butyrat], Di-(3-tert.-butyl-4-hydroxy-5-methylphenyl)-dicyclopentadien, Di-[2-(3'-tert.-butyl-2'-hydroxy-5'-methyl-benzyl)-6-tert.-butyl-4-methylphenyl]-terephthalat.

1.5. Benzylverbindungen, wie 1,3,5-Tri-(3',5'-di-tert.-butyl-4'-hydroxybenzyl)-2,4,6-trimethylbenzol, Di-(3,5-di-tert.-butyl-4-hydroxybenzyl)-sulfid, 3,5-Di-tert.-butyl-4-hydroxybenzyl-mercaptoessigsäure-isooctylester, Bis-(4-tert.-butyl-3-hydroxy-2,6-dimethylbenzyl) dithiolterephthalat, 1,3,5-Tris-(3',5'-di-tert.-butyl-4'-hydroxybenzyl)-isocyanurat, 1,3,5-Tris-(4'-tert.-butyl-3'-hydroxy-2',6'-dimethylbenzyl)-isocyanurat, 3,5-Di-tert.-butyl-4-hydroxybenzyl-phosphonsäure-dioctadecylester, 3,5-Di-tert.-butyl-4-hydroxybenzyl-phosphonsäure-monoethylester-Calcium-salz.

1.6. Acylaminophenole, wie 4-Hydroxy-laurinsäureanilid, 4-Hydroxystearinsäureanilid, 2,4-Bis-octylmercapto-6-(3',5'-di-tert.-butyl-4'-hydroxyanilino)-S-triazin.

1.7. Ester der β-(3,5-Di-tert.-butyl-4-hydroxyphenyl)-propionsäure, mit ein- oder mehrwertigen Alkoholen wie z. B. mit Methanol, Octadecanol, 1,6-Hexandiol, Neopentylglykol, Thiodiäthylenglykol, Diäthylenglykol, Triäthylenglykol, Pentaerythrit, Tris-hydroxyäthylisocyanurat, Di-hydroxyäthyl-oxalsäurediamid.

1.8. Ester der β-(5-tert.-butyl-4-hydroxy-3-methylphenyl)-propionsäure, mit ein- oder mehrwertigen Alkoholen, wie z. B. mit Methanol, Octadecanol, 1,6-Hexandiol, Neopentylglykol, Thiodiäthylenglykol, Diäthylenglykol, Triäthylenglykol, Pentaerythrit, Tris-hydroxyäthylisocyanurat, Di-hydroxyäthyl-oxalsäurediamid.

1.9. Amide der β-(3,5-Di-tert.-butyl-4-hydroxyphenyl)-propionsäure, wie z. B. N,N'-Di-(3,5-di-tert.-butyl-4-hydroxyphenylpropionyl)-hexamethylendiamin, N,N'-Di-(3,5-di-tert.-butyl-4-hydroxyphenylpropionyl)-trimethylendiamin, N,N'-Di-(3,5-di-tert.-butyl-4-hydroxyphenylpropionyl)-hydrazin.

Bevorzugte Antioxidantien sind alkylierte Monophenole, Alkyliden-Bisphenole und phenylsubstituierte Propionsäureester, insbesonders aber 2,6-Di-tert.-butyl-p-kresol, 2,2-Bis-(4'-hydroxyphenyl)-propan und β-(3,5-Di-tert.-butyl-4-hydroxyphenyl)-propionsäure-n-octadecylester. Sie werden vorzugsweise in einer Menge von 0,01-0,3 Gew.-%, bezogen auf das PVC, eingesetzt.

Die Verbindungen der Formel I sind bekannt und zum grossen Teil in der DE-OS 28 09 492 beschrieben. Soweit erfindungsgemäss Verbindungen der Formel I verwendet werden, welche in ihrer Struktur über den Umfang in dieser DE-OS hinausgehen, werden die analogen bekannten Verfahren zu ihrer Herstellung angewandt.

Auch die Triorganophosphite der Formel II sowie die Me(II)-Carboxylate, Me(II)-Phenolate und die Antioxidantien sind bekannt, so dass auf die Besprechung der Herstellungsverfahren hier verzichtet werden kann.

Eine weitere Vorzugsform der Erfindung besteht darin, dass man als Verbindung der Formel I eine solche einsetzt, in der n 1 oder 2, wobei bei n = 2 die $C_nH_{2n}$-Gruppe linear ist, und R geradkettiges oder verzweigtes $C_8$-$C_{18}$-Alkyl bedeutet.

Besonders geeignet sind die Verbindungen der Formel I, in der X O darstellt.

Weiter bevorzugt ist der Einsatz einer Verbindung der Formel I, in der n 1 und R geradkettiges oder verzweigtes $C_8$-$C_{17}$-Alkyl bedeuten.

Gemäss einer weiteren Vorzugsform der Erfindung werden als PVC-Stabilisator vom Typ Me(II)-Carboxylat und/oder Me(II)-Phenolat eine oder mehrere Verbindungen der Metalle aus der Reihe Ba, Ca und Zn eingesetzt.

Bevorzugt sind Stabilisatorengemische, wobei, bezogen auf das PVC, 0,1-1 Gew.-% der Verbindung der Formel 1, 0,2-3 Gew.-% des Me(II)-Carboxylates und/oder Me(II)-Phenolates und 0,1-2 Gew.-% des Phosphites der Formel II eingesetzt werden.

Weiterer Gegenstand der Erfindung ist stabilisiertes PVC, enthaltend ein Stabilisatorengemisch erhältlich durch Mischen mindestens einer Verbindung der Formel I, eines Me(II)-Carboxylates und/oder-Phenolates, wobei Me(II) ein oder mehrere Metalle aus der Reihe Ba, Sr, Ca, Mg, Zn oder Cd bedeutet, und zusätzlich mindestens eines Triorganophosphites der Formel II und/oder eines Antioxidans.

Ferner ist ein weiterer Gegenstand der Erfindung die Verwendung des erfindungsgemässen Stabilisatorengemisches zur Stabilisierung von PVC, wobei dem PVC mindestens eine Verbindung der Formel I und mindestens ein Me(II)-Carboxylat und/oder Me(II)-Phenolat und gegebenenfalls zusätzlich mindestens ein Triorganophosphit der Formel II und/oder mindestens ein Antioxidans gemäss den oben angegebenen Mischungsververhältnissen zugesetzt werden.

Als PVC werden bevorzugt Vinylchloridpolymere oder -Copolymere verwendet. Bevorzugt sind dabei Suspensions- und Massepolymere und ausgewaschene, also emulgatorarme Emulsionspolymere. Als Comonomere für die Copolymerisate kommen z. B. in Frage : Vinylacetat, Vinylidenchlorid, Transdichloräthan, Aethylen, Propylen, Butylen, Maleinsäure, Acrylsäure, Fumarsäure, Itaconsäure. Weitere geeignete chlorhaltige Thermoplaste sind nachchloriertes PVC und chlorierte Polyolefine, ferner Pfropfpolymerisate von PVC mit EVA (Aethylen-Vinylacetat) und MBS (Methylacrylat-Butadien-Styrol).

Die Einarbeitung der Stabilisatorkomponenten in das PVC erfolgt am günstigsten wie üblich auf einem 2-Walzenstuhl bei Temperaturen zwischen 150 und 200 °C. Im allgemeinen lässt sich eine genügende Homogenisierung innerhalb von 5 bis 15 Min. erreichen. Die Zugabe der Komponenten kann einzeln oder gemeinsam als Vorgemisch erfolgen.

Als zweckmässig hat sich ein flüssiges Vorgemisch erwiesen, d. h. es wird in Gegenwart von indifferenten Lösungsmitteln und/oder Weichmachern gearbeitet.

Beim Vormischen ist nicht ausgeschlossen, dass einige der Verbindungen der Formel I mit einer oder mehreren der anderen Komponenten des Gemisches weiter reagieren und zu weiteren Produkten führen können, welche selber als Stabilisatoren wirksam sind.

Ueblicherweise werden die Stabilisatorengemische nach dem Vermischen Vorzugsweise bei erhöhter Temperatur klarfiltriert.

In den folgenden Beispielen wird die Erfindung näher erläutert :

## Beispiel 1 und 2

Es wird die folgende Grundrezeptur verwendet :

| | |
|---|---|
| S-PVC (K-Wert 70 ; Solvic 271 GB®) (Fa. Solvay) | 100 Gewichtsteile |
| Dioctylphthalat | 18 Gewichtsteile |
| Epoxidiertes Sojaöl | 2 Gewichtsteile |
| Stabilisator | 2 Gewichtsteile |

Die Stabilisatoren von Beispiel 1 und 2 setzen sich wie folgt zusammen (Angaben der Mengen jeweils in Gewichtsteilen) :

| | Beispiel 1 | Beispiel 2 |
|---|---|---|
| Toluol | 10,0 | 10,0 |
| Zn-Oleat | 19,0 | 19,0 |
| Ba-p-tert.-butylbenzoat | 18,0 | 18,0 |
| n-Octadecyl-[3-(3',5'-di-tert.butyl-4'-hydroxyphenyl)-propionat] | 4,4 | 4,4 |
| Didecylphenylphosphit | 40,0 | 40,0 |
| $(i\text{-}C_8H_{17}OOC\text{-}CH_2S\text{-})_3PS$ | 9,0 | - |
| $(i\text{-}C_8H_{17}OOC\text{-}CH_2S\text{-})_3PO$ | - | 9,0 |

Es wird der Dauerwalztest bei 190 °C durchgeführt, wobei die oben angegebene Grundrezeptur bei konstanter Temperatur (190 °C) 5 Minuten auf dem Mischwalzwerk zuerst plastifiziert und anschliessend nach Zeitabständen von 5 Minuten Proben aus der Mitte der Folie (0,3 mm Dicke) geschnitten werden. Danach wird der Yellownessindex nach ASTM D 1925-70 bestimmt. Die Versuchsergebnisse sind in der Tabelle 1 zusammengestellt.

Tabelle 1

| Walzzeit | 5' | 10' | 15' | 20' | 25' | 30' | 35' | 40' | 45' | 50' | 55' | 60' |
|---|---|---|---|---|---|---|---|---|---|---|---|---|
| Bsp. 1 | 4,3 | 4,7 | 5,6 | 7,1 | 7,7 | 8,7 | 9,8 | 10,6 | 13,2 | 16,3 | 24,4 | 37,5 |
| Bsp. 2 | 3,0 | 3,9 | 4,4 | 5,8 | 6,3 | 7,4 | 9,8 | 13,8 | 17,8 | 29,5 | 55,6 | - |

Beispiel 3 und 4

Es wird die folgende Grundrezeptur verwendet :

| | |
|---|---|
| S-PVC (K-Wert 70, Solvic 271 GB®) | 100 Gewichtsteile |
| Dioctylphthalat | 18,0 Gewixhtsteile |
| Epoxidiertes Sojaöl | 2,0 Gewichtsteile |
| Ba-p-tert.butylbenzoat | 0,4 Gewichtsteile |
| Zn-Stearat | 0,4 Gewichtsteile |
| n-Octadecyl-[3-(3',5'-di-tert.butyl-4'-hydroxylphenyl)-propionat] | 0,1 Gewichtsteile |
| Verbindung der Formel I | 1,0 Gewichtsteile |

Folgende Verbindungen der Formel I werden verwendet :

Beispiel 3 : $(i\text{-}C_8H_{17}OOC\text{—}CH_2S\text{—})_3PS$
Beispeil 4 : $(i\text{-}C_8H_{17}OOC\text{—}CH_2S\text{—})_3PO$

Es wird wie in Beispiel 1 und 2 der Dauerwalztest bei 190 °C durchgeführt. Die Versuchsergebnisse sind in der Tabelle 2 zusammengestellt.

Tabelle 2

| Walzzeit | 5' | 10' | 15' | 20' | 25' | 30' | 35' | 40' | 45' | 50' |
|---|---|---|---|---|---|---|---|---|---|---|
| Bsp. 3 | 4,4 | 6,7 | 10,6 | 14,9 | 20,5 | 24,7 | 34,6 | 50,9 | 58,5 | 65,9 |
| Bsp. 4 | 2,9 | 5,3 | 8,5 | 14,0 | 25,3 | 47,1 | 59,0 | 71,9 | 100 | 120 |
| Ohne Kostabilisator der Formel I | 11,4 | 24,1 | 33,1 | 38,4 | 40,0 | 38,4 | 38,7 | 120 | - | - |

Beispiel 5-8 :

Es wird die folgende Grundrezeptur verwendet :

| | |
|---|---|
| S-PVC (K-Wert 70 ; Solvic 271 GB®) | 100 Gew.-Teile |
| Dioctylphthalat | 18 Gew.-Teile |
| Epoxidiertes Sojaoel | 2 Gew.-Teile |
| Grundstabilisator | 2 Gew.-Teile |
| Erfindungsgemässer Kostabilisator der Formel I | 0,2 Gew.-Teile |

Zusammensetzung des Grundstabilisators (2 Gew.-Teile) :
15 Gew.-% aromatischer Kohlenwasserstoff (Shell Sol A®)
30 Gew.-% Calciumoleat

16 Gew.-% Zinkoleat
36 Gew.-% Didecylphenylphosphit
3 Gew.-% 2,2-Bis-(4'-hydroxyphenyl)-propan (Bisphenol A®)
Folgende Kostabilisatoren der Formel I werden verwendet :

Beispiel 5 : $(i\text{-}C_8H_{17}OOC{-}CH_2S{-})_3PO$
Beispiel 6 : $(n\text{-}C_6H_{13}OOC{-}CH_2S{-})_3PO$
Beispiel 7 : $(n\text{-}C_{12}H_{25}OOC{-}CH_2S{-})_3PO$
Beispiel 8 : $[n\text{-}C_8H_{17}OOC\text{-}CH(CH_3)S{-}]_3PO$

Nach Herstellung eines Walzfelles auf einem Mischwalzwerk bei 180 °C/5 Minuten wird mit der oben angegebenen Grundrezeptur ein statischer Hitzetest bei 180 °C durchgeführt, wobei aus den Walzfellen Proben (0,3 mm Dicke) ausgeschnitten, auf Glasplatten (1 mm Dicke) gelegt und in einem Wärmeschrank thermisch belastet werden. Nach Zeitabständen von 5 Minuten wird eine Probe zur Messung des Yellowness-Indices nach ASTMD 1925-70 entnommen.

Ausserdem wurden zur Messung der Transparenz und des Grades der Vergilbung Pressplatten nach DIN 53490 hergestellt.

Versuchsergebnisse des statischen Hitzetests

Tabelle 3

| Walzzeit in Min.) | 0' | 5' | 10' | 15' | 20' | 25' | 30' | 35' | 40' | 45' | 50' | 55' | 60' |
|---|---|---|---|---|---|---|---|---|---|---|---|---|---|
| ohne Kostabilisator | 8,3 | 11,5 | 11,6 | 12,4 | 13,3 | 14,1 | 14,6 | 14,6 | 14,6 | 14,6 | 14,6 | 19,1 | 60,1 |
| Bsp. 5 | 4,3 | 6,6 | 6,6, | 8,3 | 8,3 | 8,3 | 8,7 | 8,9 | 10,9 | 10,7 | 12,7 | 20,0 | 36,4 |
| Bsp. 6 | 4,8 | 6,5 | 6,5 | 6,9 | 8,3 | 8,9 | 8,9 | 8,9 | 12,4 | 12,4 | 15,4 | 23,4 | 38,3 |
| Bsp. 7 | 3,9 | 5,5 | 5,8 | 7,2 | 7,2 | 9,2 | 9,6 | 9,6 | 10,9 | 11,2 | 13,4 | 23,1 | 35,3 |
| Bsp. 8 | 6,2 | 8,0 | 8,5 | 11,6 | 11,6 | 11,6 | 11,6 | 11,6 | 11,6 | 11,6 | 12,7 | 16,1 | 27,3 |

Versuchsergebnisse des Pressplattentests

Tabelle 4

| Kostabilisator der Formel I | Vergilbung, YI ASTM D 1925-70 | Transparenz nach ASTM D 2805-70 (Kontrastverhältnis)* |
|---|---|---|
| ohne Kostabilisator | 42,6 | 9,8 |
| Bsp. 5 | 27,0 | 8,4 |
| Bsp. 6 | 25,8 | 7,2 |
| Bsp. 7 | 23,7 | 5,6 |
| Bsp. 8 | 33,0 | 9,5 |

* Konstrastverhältnis = Remission der Folie über schwarzem Untergrund/Remission der Folie über weissem Untergrund ; Ein hohes Kontrastverhältnis bedeutet schlechte Transparenz.

Beispiel 9-10 :

Es wird die gleiche Grundrezeptur wie bei den Beispielen 5-8 verwendet und im Grundstabilisator ein handelsübliches Ba/Zn-Stabilisator-Gemisch folgender Zusammensetzung gewählt :

8,4 Gew.-% aromatischer Kohlenwasserstoff (Shell Sol. A®)
29 Gew.-% Barium-p-tert.-butylbenzoat
25,2 Gew.-% Zinkoleat
34,4 Gew.-% Didecylphenylphosphat
3,0 Gew.-% 2,6-Di-tert.-butyl-p-kresol (BHT)

Folgende Kostabilisatoren der Formel I werden verwendet :

Beispiel 9 : $(n\text{-}C_6H_{13}OOC—CH_2CH_2S—)_3PO$
Beispiel 10 : $(n\text{-}C_8H_{17}OOC—CH_2CH_2S—)_3PO$

Es wird der Dauerwalztest bei 190 °C gemäss Beispielen 5-8 durchgeführt und der Yellowness-Index nach ASTM D 1925-70 bestimmt. Die Versuchsergebnisse sind in Tabelle 5 zusammengestellt.

| Walzzeit in Min. | 5' | 10' | 15' | 20' | 25' | 30' | 35' | 40' |
|---|---|---|---|---|---|---|---|---|
| ohne Kostabilisator | 10,2 | 15,6 | 15,8 | 15,4 | 14,1 | 13,6 | 16,1 | 53,4 |
| Bsp. 9 | 7,2 | 9,5 | 10,6 | 10,8 | 11,2 | 11,9 | 14,8 | 52,5 |
| Bsp. 10 | 6,5 | 8,9 | 10,4 | 10,8 | 10,7 | 11,1 | 18,7 | 60,6 |

Beispiele 11-13

Es wird die gleiche Grundrezeptur wie bei den Beispielen 5-8 verwendet und im Grundstabilisator ein Barium-nonylphenolat folgender Zusammensetzung eingesetzt :

19,9 Gew.-% Tripropylenglykolmonomethyläther
30,9 Gew.-% Barium-p-nonylphenolat
15,6 Gew.-% Zinkversatat (Zn-Salz der Versatic-10-Säure®, Shell)
30,9 Gew.-% Didecylphenylphosphit
2,7 Gew.-% 2,6-Di-tert.-butyl-p-kresol (BHT)

Es wird wie in Beispielen 5-8 der statische Hitzetest bei 180 °C und der Pressplattentest durchgeführt. Die Versuchsergebnisse sind in Tabellen 6 und 7 zusammengestellt.

Statischer Hitzetest

Tabelle 6 (Yellowness-Index nach ASTM D 1925-70)

| Walzzeit in Min. | 0' | 5' | 10' | 15' | 20' | 25' | 30' | 35' | 40' | 45' | 50' | 55' | 60' | 65' | 70' |
|---|---|---|---|---|---|---|---|---|---|---|---|---|---|---|---|
| ohne Kostabilisator | 10,5 | 19,9 | 22,3 | 30,9 | 37,7 | 35,5 | 36,9 | 33,9 | 33,2 | 29,4 | 25,4 | 22,7 | 27,0 | * | * |
| Bsp. 11 | 3,6 | 5,3 | 9,4 | 13,5 | 19,4 | 21,9 | 23,2 | 24,9 | 25.2 | 21,8 | 20,5 | 18,2 | 18,1 | 27,7 | 62,8 |
| Bsp. 12 | 3,5 | 6,1 | 10,8 | 15,0 | 20,3 | 21,4 | 23,2 | 24,0 | 22,9 | 22,3 | 21,2 | 18,9 | 18,1 | 32,9 | 41,2 |
| Bsp. 13 | 3,1 | 4,1 | 7,5 | 12,6 | 16,2 | 20,9 | 21,8 | 23,2 | 23,3 | 22,5 | 21,4 | 19,5 | 18,5 | 27,0 | 50,5 |

* = Zersetzung des Walzfells

Beispiel 11 : $(i\text{-}C_8H_{17}OOC—CH_2S—)_3PO$
Beispiel 12 : $(n\text{-}C_6H_{13}OOC\text{-}CH_2S—)_3PO$
Beispiel 13 : $[n\text{-}C_8H_{17}OOC—CH(CH_3)S—]_3PO$

Tabelle 7

Pressplattentest (Messung der Vergilbung und Transparenz)

| Kostabilisator der Formel I | Vergilbung, YI, ASTM D 1925-70 | Transparenz nach ASMD D 2805-70 (Kontrastverhältnis) |
|---|---|---|
| ohne Kostabilisator | 61,5 | 2,1 |
| Bsp. 11 | 22,0 | 1,0 |
| Bsp. 12 | 23,1 | 0,7 |
| Bsp. 13 | 19,1 | 0,9 |

**Patentansprüche**

1. Stabilisatorengemisch erhältlich durch Mischen mindestens einer Verbindung der Formel I

$$[ROOC—C_nH_{2n}S—]_3PX \qquad (I)$$

in der X O oder S, n eine ganze Zahl von 1 bis 5 und R geradkettiges oder verzweigtes $C_1$-$C_{18}$-Alkyl oder substituiertes oder unsubstituiertes Cyclohexyl bedeuten, und mindestens eines PVC-Stabilisators vom Typ Me(II)-Carboxylat und/oder Me(II)-Phenolat, wobei Me(II) ein oder mehrere Metalle aus der Reihe Ba, Sr, Ca, Mg, Zn und Cd bedeutet, und wobei, bezogen auf das PVC, 0,01-2 Gew.-% der Verbindung der Formel I und 0,1-4 Gew.-% des Me(II)-Carboxylates und/oder Me(II)-Phenolates eingesetzt werden.

2. Stabilisatorengemisch gemäss Anspruch 1, dadurch gekennzeichnet, dass man als Verbindung der Formel I eine solche einsetzt, in der n 1 oder 2 und R geradkettiges oder verzweigtes $C_8$-$C_{18}$-Alkyl bedeuten.

3. Stabilisatorengemisch gemäss Anspruch 1, dadurch gekennzeichnet, dass man als Verbindung der Formel I eine soche einsetzt, in der n 1 und R geradkettiges oder verzweigtes $C_8$-$C_{17}$-Alkyl bedeuten.

4. Stabilisatorengemisch gemäss Anspruch 1, dadurch gekennzeichnet, dass man als PVC-Stabilisator vom Typ Me(II)-Carboxylat und/oder Me(II)-Phenolat eine oder mehrere verbindungen der Metalle aus der Reihe Ba, Ca und Zn einsetzt.

5. Stabilisatorengemisch gemäss Anspruch 1, dadurch gekennzeichnet, das zusätzlich mindestens ein Triorganophosphit der Formel II

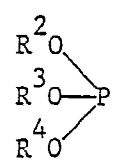

(II)

in der $R^2$, $R^3$ und $R^4$ gleich oder verschieden sind und geradkettiges oder verzweigtes $C_4$-$C_{18}$-Alkyl oder einen substituierten oder unsubstituierten Phenylrest darstellen, und/oder mindestens ein Antioxidans mitverwendet werden, wobei, bezogen auf das PVC, 0,01-2 Gew.-% der Verbindung der Formel I, 0,1-4 Gew.-% des Me(II)-Carboxylates und/oder Me(II)-Phenolates, 0,05-4 Gew.-% des Phosphites der Formel II und/oder 0,01-1 Gew.-% des Antioxidans eingesetzt werden.

6. Stabilisatorengemisch gemäss Anspruch 5, dadurch gekennzeichnet, dass als Antioxidans 0,01-0,3 Gew.-%, bezogen auf das PVC, 2,6-Ditert.-butyl-p-kresol und/oder ß-(3,5-Di-tert.-butyl-4-hydroxyphenyl)-propionsäure-n-octadecylester und/oder 2,2-Bis-(4'-hydroxyphenyl)-propan eingesetzt werden.

7. Stabilisatorengemisch gemäss Anspruch 5, dadurch gekennzeichnet, dass, bezogen auf das PVC, 0,1-1 Gew.-% der Verbindung der Formel I, 0,2 bis 3 Gew.-% des Me(II)-Carboxylates und/oder des Me(II)-Phenolates und 0,1 bis 2 Gew.-% des Triorganophosphites der Formel II eingesetzt werden.

8. Stabilisiertes PVC, enthaltend ein Stabilisatorengemisch gemäss Anspruch 1.

9. Stabilisiertes PVC, enthaltend ein Stabilisatorengemisch gemäss Anspruch 5.

10. Verwendung des Stabilisatorengemisches gemäss Anspruch 1 zur Stabilisierung von PVC, dadurch gekennzeichnet, dass dem PVC mindestens eine Verbindung der Formel I und mindestens ein Me(II)-Carboxylat und/oder Me(II)-Phenolat zugesetzt werden.

11. Verwendung des Stabilisatorengemisches gemäss Anspruch 5 zur Stabilisierung von PVC,

dadurch gekennzeichnet, dass dem PVC zusätzlich mindestens ein Triorganophosphit der Formel II und/oder mindestens ein Antioxidans zugesetzt werden.

12. Verwendung von Verbindungen der Formel Ib gemäss Anspruch 10

$$[ROOC-\underset{\underset{R^1}{|}}{(CH)}_n S-]\ PX \qquad (Ib)$$

in der X O oder S, n eine ganze Zahl von 1 bis 5, $R^1$ geradkettiges $C_1$-$C_3$-Alkyl oder H und R geradkettiges oder verweigtes $C_1$-$C_{18}$-Alkyl oder substituiertes oder unsubstituiertes Cyclohexyl bedeuten, als Kostabilisatoren für PVC-Stabilisatoren vom Typ Me(II)-Carboxylat und/oder Me(II)-Phenolat, wobei Me(II) ein oder mehrere Metalle aus der Reihe Ba, Sr, Ca, Mg, Zn und Cd bedeutet, und wobei, bezogen auf das PVC, 0,01-2 Gew.-% der Verbindung der Formel I und 0,1-4 Gew.-% des Me(II)-Carboxylates und/oder Me(II)-Phenolates eingesetzt werden.

**Claims**

1. A stabiliser mixture obtainable by mixing at least one compound of the formula I

$$[ROOC—C_nH_{2n}S—]_3PX \qquad (I)$$

wherein X is O or S, n is an integer from 1 to 5, and R is straight chain or branched $C_1$-$C_{18}$ alkyl or substituted or unsubstituted cyclohexyl, and at least one PVC stabiliser of the type Me(II) carboxylate and/or Me(II) phenolate, where Me(II) is one or more metals selected from the series consisting of : Ba, Sr, Ca, Mg, Zn and Cd, and which mixture contains, based on the PVC, 0.01-2 per cent by weight of the compound of the formula I and 0.1-4 per cent by weight of the Me(II) carboxylate and/or Me(II) phenolate.

2. A stabiliser mixture according to claim 1, which contains a compound of the formula I, in which n is 1 or 2, and R is straight chain or branched $C_8$-$C_{18}$alkyl.

3. A stabiliser mixture according to claim 1, which contains a compound of the formula I, in which n is 1, and R is straight chain or branched $C_8$-$C_{17}$alkyl.

4. A stabiliser mixture according to claim 1, which contains as PVC stabiliser of the type Me(II) carboxylate and/or Me(II) phenolate one or more compounds of the metals selected from the series consisting of : Ba, Ca and Zn.

5. A stabiliser mixture according to claim 1, which additionally contains at least one triorganophosphite of the formula II

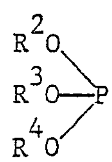

(II)

wherein $R^2$, $R^3$ and $R^4$ are identical or different, and are straight chain or branched $C_4$-$C_{18}$alkyl or a substituted or unsubstituted phenyl group, and/or at least one antioxidant, and said mixture also containing, based on the PVC, 0.01-2 per cent by weight of the compound of the formula I, 0.1-4 per cent by weight of the Me(II) carboxylate and/or Me(II) phenolate, 0.05-4 per cent by weight of the phosphite of the formula II, and/or 0.01-1 per cent by weight of the antioxidant.

6. A stabiliser mixture according to claim 5, which contains as antioxidant 0.01-0.3 per cent by weight, based on the PVC, of 2,6-di-tert-butyl-p-cresol and/or ß-(3,5-di-tert-butyl-4-hydroxyphenyl) propionic acid n-octadecyl ester and/or 2,2-bis-(4′-hydroxyphenyl) propane.

7. A stabiliser mixture according to claim 5, which contains, based on the PVC, 0.1 to 1 per cent by weight of the compound of the formula I, 0.2-3 per cent by weight of the Me(II) carboxylate and/or of the Me(II) phenolate, and 0.1-2 per cent by weight of the triorganophosphite of the formula II.

8. Stabilised PVC containing a stabiliser mixture according to claim 1.

9. Stabilised PVC containing a stabiliser mixture according to claim 5.

10. Use of a stabiliser mixture according to claim 1 for stabilising PVC, wherein there are added to the PVC at least one compound of the formula I and at least one Me(II) carboxylate and/or Me(II) phenolate.

11. Use of a stabiliser mixture according to claim 5 for stabilising PVC, wherein there are additionally added to the PVC at least one triorganophosphite of the formula II and/or at least one antioxidant.

12. Use of a compound of the formula Ib according to claim 10

$$[ROOC-\underset{\underset{R^1}{|}}{(CH)}_n S-]\ PX \qquad (Ib)$$

wherein X is O or S, n is an integer from 1 to 5, $R^1$ is straight chain $C_1$-$C_3$alkyl or hydrogen, and R is straight chain or branched $C_1$-$C_{18}$alkyl or substituted or unsubstituted cyclohexyl, as costabiliser for PVC stabilisers of the type Me(II) carboxylate and/or Me(II) phenolate, where Me(II) is one or more metals selected from the series consisting of Ba, Sr, Ca, Mg, Zn and Cd, and wherein there are used, based on the PVC, 0.01-2 per cent by weight of the compound of the formula I and 0.1-4 per cent by weight of the Me(II) carboxylate and/or Me(II) phenolate.

**Revendications**

1. Mélange stabilisant que l'on peut obtenir en mélangeant au moins un composé répondant à la formule I

$$[ROOC—C_nH_{2n}S—]_3PX \qquad (I)$$

dans laquelle X représente O ou S, n représente un nombre entier de 1 à 5 et R représente un alkyle linéaire ou ramifié en $C_1$-$C_{18}$, ou un cyclohexyle substitué ou non, et au moins un stabilisant du PVC du type des carboxylates de Me(II) et/ou des phénolates de Me(II), le symbole Me(II) désignant un ou plusieurs métaux appartenant à l'ensemble constitué par Ba, Sr, Ca, Mg, Zn et Cd, et la proportion du composé de formule I étant de 0,01 à 2% en poids et celle du carboxylate de Me(II) et/ou du phénolate de Me(II) étant de 0,1 à 4% en poids, par rapport au PVC.

2. Mélange stabilisant selon la revendication 1, caractérisé en ce qu'il contient un composé de formule I dans lequel n est égal à 1 ou à 2 et R représente un alkyle linéaire ou ramifié qui contient de 8 à 18 atomes de carbone.

3. Mélange stabilisant selon la revendication 1, caractérisé en ce qu'il contient un composé de formule I dans lequel n est égal à 1 et R représente un alkyle linéaire ou ramifié qui contient de 8 à 17 atomes de carbone.

4. Mélange stabilisant selon la revendication 1, caractérisé en ce qu'il contient, comme stabilisant du PVC du type des carboxylates de Me(II) et/ou des phénolates de Me(II), un ou plusieurs composés de métaux pris dans l'ensemble constitué par Ba, Ca et Zn.

5. Mélange stabilisant selon la revendication 1, caractérisé en ce qu'il contient en outre au moins un triorganophosphite répondant à la formule II.

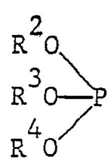

(II)

dans laquelle $R^2$, $R^3$ et $R^4$ représentent chacun, indépendamment les uns des autres, un radical alkyle en $C_4$-$C_{18}$ linéaire ou ramifié ou un radical phényle substitué ou non, et/ou au moins un anti-oxydant, la proportion du composé de formule I étant de 0,01 à 2 % en poids, celle du carboxylate de Me(II) et/ou du phénolate de Me(II) étant de 0,1 à 4 % en poids, celle du phosphite de formule II étant de 0,05 à 4 % en poids, celle du phosphite de formule II étant de 0,05 à 4 % en poids et/ou celle de l'anti-oxydant étant de 0,01 à 1 % en poids, toutes ces proportions étant rapportées au PVC.

6. Mélange stabilisant selon la revendication 5, caractérisé en ce qu'il contient, comme anti-oxydant, de 0,01 à 0,3 % en poids, par rapport au PVC de di-tert-butyl-2,6 p-crésol et/ou de (di-tert-butyl-3,5 hydroxy-4 phényl)-3 propionate de n-octadécyle et/ou de bis-(hydroxy-4 phényl)-2,2 propane.

7. Mélange stabilisant selon la revendication 5, caractérisé en ce qu'il contient, par rapport au PVC, de 0,1 à 1 % en poids du composé de formule I, de 0,2 à 3 % en poids du carboxylate de Me(II) et/ou du phénolate de Me(II), et de 0,1 à 2 % en poids du triorganophosphite de formule II.

8. PVC stabilisé qui contient un mélange stabilisant selon la revendication 1.

9. PVC stabilisé qui contient un mélange stabilisant selon la revendication 5.

10. Application du mélange stabilisant selon la revendication 1 pour la stabilisation du PVC, application caractérisée en ce qu'on ajoute au PVC au moins un composé de formule I et au moins un carboxylate de Me(II) et/ou un phénolate de Me(II).

11. Application du mélange stabilisant selon la revendication 5 pour la stabilisation du PVC, application caractérisée en ce qu'on ajoute au PVC, en supplément, au moins un triorganophosphite de formule II et/ou au moins un anti-oxydant.

12. Application selon la revendication 10, selon laquelle on utilise des composés répondant à la formule Ib

$$[ROOC-C_nH_{2n}S-]_3\ PX \qquad (Ib)$$

dans laquelle X représente O ou S, n représente un nombre entier de 1 à 5 $R^1$ représente un alkyle linéaire en $C_1$-$C_3$ ou H, et R représente un alkyle en $C_1$-$C_{18}$, linéaire ou ramifié, où un cyclohexyle substitué ou non, comme co-stabilisants pour des stabilisants du PVC du type des carboxylates de Me(II) et/ou des phénolates de Me(II), le symbole Me(II) représentant un ou plusieurs métaux pris dans l'ensemble constitué par Ba, Sr, Ca, Mg, Zn et Cd, et la proportion du composé de formule I étant comprise entre 0,01 et 2 % en poids et celle du carboxylate de Me(II) et/ou du phénolate de Me(II) entre 0,1 et 4 % en poids, à chaque fois par rappport au PVC.